# EUROPEAN PATENT SPECIFICATION

(11) **EP 0 537 871 B1**
(45) Date of publication and mention of the grant of the patent: **28.02.1996**
(21) Application number: 92250294.3
(22) Date of filing: 12.10.1992
(51) Int. Cl.: C10G 11/05, B01J 21/12

(54) **Silica containing bayerite or eta-alumina and catalytic cracking catalysts**
Siliciumdioxid enthaltenden Bayerit oder Eta-Aluminiumoxid und Crackkatalysatoren
Bayerite ou eta-alumine contenant de la silice et catalyseurs de craquage

(30) Priority: 18.10.1991 US 780680; 28.01.1992 US 827119
(43) Date of publication of application: 21.04.1993
(73) Proprietor: W.R. Grace & Co.-Conn., New York, New York 10036 (US)
(72) Inventor: Cheng, Wu-Cheng, Ellicott City, MD 21042 (US); Rudeshill, John Allen, Columbia, MD 21044 (US); Laine, Norman Raymond, Rockville, MD 20853 (US)
(74) Representative: UEXKÜLL & STOLBERG

(56) References cited:
- EP-A- 0 184 506
- EP-A- 0 385 246
- US-A- 4 392 988

## Description

The present invention relates to novel alumina compositions and more particularly to improved bayerite/eta alumina compositions that possess a high degree of hydrothermal stability.

Furthermore, the present invention relates to catalytic cracking, and more specifically to catalytic cracking compositions and processes that may be used to catalytically convert high molecular weight feedstocks into valuable lower molecular weight products.

It is generally known that catalytic cracking catalysts which comprise zeolites such as synthetic faujasite zeolite Beta and ZSM-5 dispersed in an inorganic oxide matrix such as silica/alumina hydrogel, sols and clay may be used to economically convert heavy hydrocarbon feedstocks such as gas-oils and/or resid into gasoline and diesel fuel.

More recently it has been disclosed that the addition of aluminas to cracking catalyst compositions will improve the overall performance of the catalyst particularly when used to process feedstocks that contain significant quantities of sulfur and/or contaminant metals such as vanadium and nickel.

Canadian patent 1,117,511 describes FCC catalysts which contain free alumina hydrate, particularly alpha-alumina hydrate (boehmite) which may be used to catalytically crack hydrocarbons that contain sulfur and/or metals including nickel and vanadium.

Japanese Patent Publication 84/1088 discloses catalytic cracking catalysts which contain aluminas such as Bayer Process aluminas (gibbsite), rho, and bayerite that are particularly effective for reducing the production of coke and hydrogen when used to process hydrodesulfurised Kuwait vacuum gas-oil.

U.S. Patent 4,010,116 discloses FCC catalysts which contain pseudo-boehmite aluminas that may contain crystalline trihydrate components such as bayerite and gibbsite.

U.S. Patent 3,312,615 discloses the use of inorganic oxides such as eta alumina in the preparation of FCC catalysts.

EP 0 385 246 A1, CA-A-2 004 511 and US-A-5 168 086 describe zeolite containing catalysts which include bayerite/eta alumina as a matrix component or additive that are particularly useful for the processing of nickel containing feedstocks.

Bayerite, which is converted to eta alumina by heating at temperatures of from about 200 to 800°C, have been used in the preparation of various catalytic compositions including hydrocarbon conversion catalyst.

While it is recognized that aluminas including bayerite, eta, pseudoboehmite and gibbsite may be added to catalytic cracking catalysts to improve the stability and coke/dry gas selectivity thereof, the industry continues efforts to develop catalytic cracking catalyst compositions that possess improved hydrothermal stability and which may be used to control the adverse effects of metals such as nickel.

While bayerite/eta alumina exhibits considerable resistance to thermal degradation at elevated temperatures, it has been found that the high temperature hydrothermal (steam) conditions encountered in commercial FCC cracking units tend to deactivate bayerite/eta alumina components over a relatively short period.

It is therefore an object of the present invention to provide a novel bayerite/eta alumina composition which possesses a high degree of hydrothermal stability.

It is a further object to provide improved bayerite/eta alumina which may be used in the preparation of catalytic compositions.

It is yet another object to provide a method by which commercial quantities of highly stable bayerite/eta alumina may be economically produced.

It is still a further object to provide fluid catalytic cracking catalyst compositions which may be used to crack hydrocarbon feedstocks that contain Ni and/or V.

It is an object to provide improved alumina cation FCC catalysts and additives which possess a particularly high degree of hydrothermal stability.

It is another object of the present invention to provide an improved catalytic cracking composition and process for converting hydrocarbon feedstocks to more valuable low molecular weight products such as gasoline and diesel fuel.

It is a further object to provide a catalytic cracking process wherein hydrocarbon feedstocks containing in excess of about 10 ppm nickel may be economically processed in conventional FCC units.

It is a further object to provide improved alumina containing FCC catalyst compositions and additives which can tolerate large quantities of nickel without producing unacceptable quantities of coke and hydrogen.

It is yet a further object to provide a particulate FCC catalyst additive composition that may be blended with conventional zeolite containing catalysts to control the adverse effect of metal such as nickel.

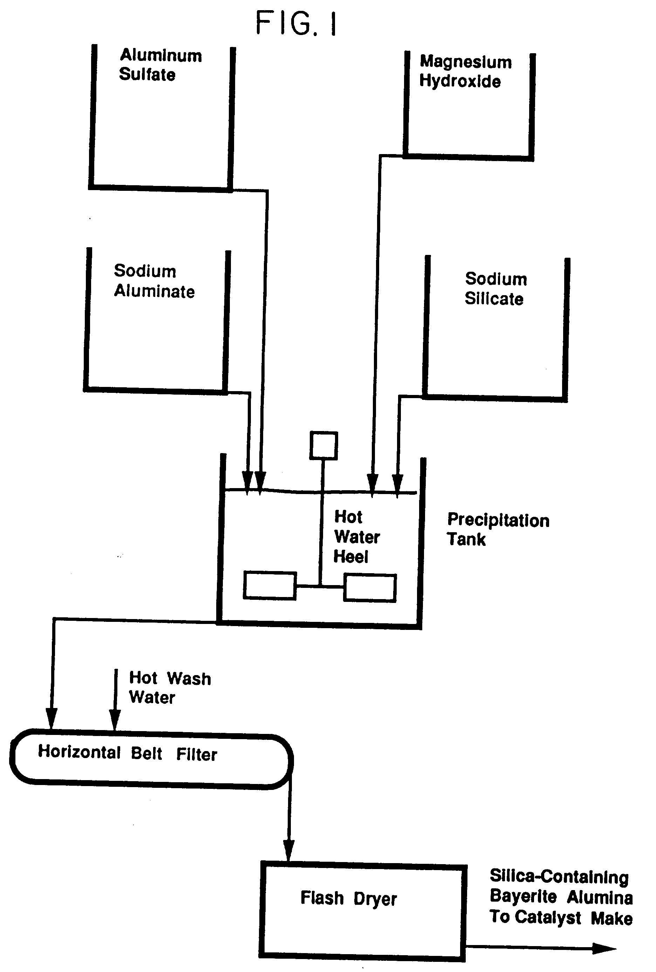

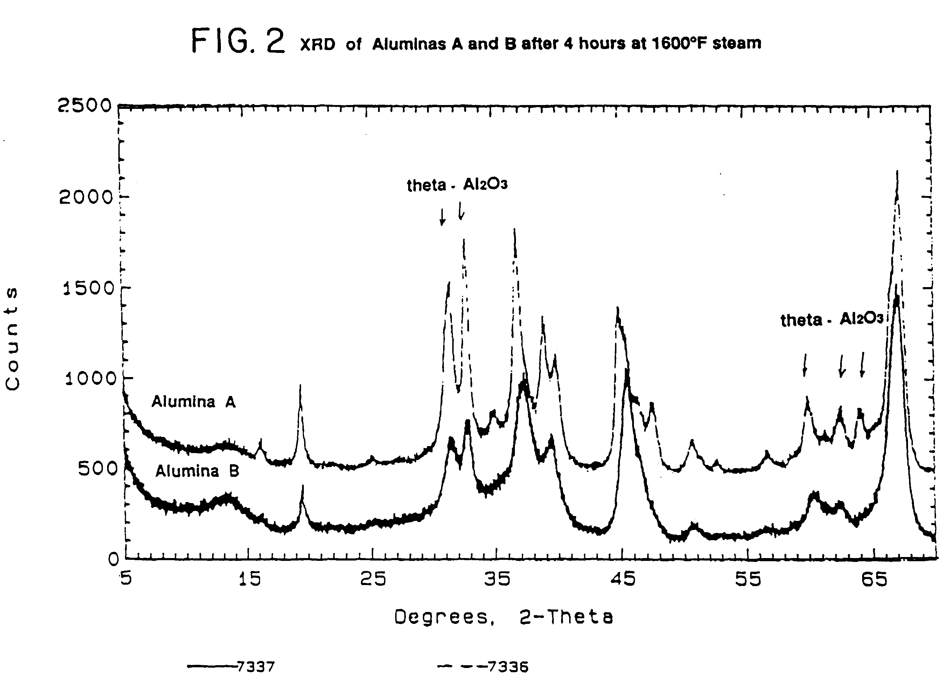

These and still further objects will become readily apparent to one skilled-in-the-art from the following detailed description and drawings wherein Figure 1 is a flow diagram that outlines a preferred method for preparing the novel products of our invention; and Figure 2 is a graphic representation of X-ray diffraction data which illustrates the hydrothermal stability of the silica modified bayerite/eta alumina our invention.

Broadly, our invention contemplates silica-modified bayerite/silica-modified eta aluminas which contain from 0.5 to 10 weight percent silica (SiO₂), and optionally up to 2 weight percent magnesia (MgO).

More particularly, we have found that a novel silica containing bayerite may be prepared by reacting aqueous solutions of sodium aluminate, aluminum sulfate and sodium silicate at a pH of 10.0 to 11.5, preferably in the presence of finely divided magnesium hydroxide "seeds" which function as bayerite crystallization nucleation centers to "direct" to formation of bayerite. The novel silica containing bayerite may then be converted to hydrothermally stable silica containing eta alumina by heating to temperatures of from 200 to 800°C.

The novel silica bayerite possesses the following chemical and physical characteristics:
(1) a chemical composition which includes from 0.5 to 10, and more preferably 2 to 7 weight percent SiO₂ wherein the SiO₂ component is dispersed throughout the alumina as a coprecipitated component, and less than 2 weight percent Na₂O, and optionally 0.1 to 2.0 weight percent MgO;
(2) a surface area of 300 to 400 m/g after calcination at 538°C for 2 hours;
(3) a pore volume of 0.3 to 0.5 cc/g distributed on pores ranging from 20 to 1500 Å (20-150 nm)
(4) an X-ray diffraction pattern which indicates the presence of 70 to 95 weight percent bayerite and 5 to 30 weight percent other alumina(s) including pseudoboehmite.

Upon heating to temperatures of 200 to 800°C, the silica-containing bayerite is converted to silica containing eta alumina which has the following properties:
(1) A chemical composition comprising 0.5 to 10 weight percent SiO₂, less than 2 weight percent Na₂O which is uniformly distributed throughout the alumina structure, and optionally 0.1 to 2.0 weight percent MgO;
(2) A surface area of 300 to 400 m/g after heating to 538°C in the absence of added steam;
(3) A pore volume of 0.3 to 0.5 cc/g upon heating to 538°C in the absence of added steam.

A preferred method for preparing the compositions of our invention is outlined in the drawing and comprises the following steps:
(1) Preparing aqueous solutions of sodium silicate, aluminum sulfate and sodium aluminate which contain 2 to 25 weight percent silica, 2 to 8 weight percent alumina and 10 to 22 weight percent alumina, respectively;
(2) Preparing a finely divided aqueous suspension of magnesium hydroxide by reacting magnesium sulfate with sodium hydroxide to obtain 0.05 to 0.15 weight percent suspended Mg(OH)₂;
(3) The reactants are combined in a mixed reaction vessel which contains a water heel heated to a temperature of 30 to 100°C, preferably by first adding the magnesium hydroxide seed suspension (or the reactant precursors thereof): then simultaneously adding the sodium aluminate and aluminum sulfate solutions; and finally adding the sodium silicate solution during the latter part of the reaction period.
(4) The rate of addition of the reactants is regulated to maintain a reaction pH of 10.5 to 11.5 over the duration of the reaction currently set at 100 minutes.
(5) Upon completion of the reaction/aging step, the precipitated hydrous silica containing bayerite product is recovered by filtration, washed with water to remove soluble sodium sulfate impurities, flash dried to obtain 30-35% total volatiles in powder, and optionally calcined at 200 to 800°C to convert the bayerite to eta alumina.

The silica-modified bayerite/silica-modified eta alumina of our invention may be advantageously added to FCC catalysts to improve the performance thereof in the presence of nickel. Typically, FCC catalysts which contain a zeolite/molecular sieve component such as synthetic faujasite (type X & Y zeolite), ZSM-5, and/or zeolite beta dispersed in an inorganic oxide matrix such as clay, silica, alumina and silica-alumina hydrogels, may be combined with from 1 to 50 weight percent of the silica-modified bayerite/silica-modified eta alumina described herein.

In addition, the novel compositions may be used in the preparation of catalyst supports for noble metals, metals, nonmetals and compounds thereof such as oxides, sulfides, halides, chalcogenides, and combinations of said materials.

Our invention contemplates zeolite catalytic cracking catalyst compositions that contain silica modified bayerite and/or silica-modified eta alumina and the use thereof to process hydrocarbon feedstocks.

More specifically, we have discovered that zeolite containing cracking catalyst compositions which contain from 1 to 50 wt.% silica modified bayerite and/or silica-modified eta alumina possess a particularly high degree of hydrothermal stability, metals tolerance and bottoms cracking capability.

In particular, we have found that if silica modified bayerite and/or silica-modified eta alumina is added to conventional particulate zeolite containing fluid catalytic cracking (FCC) catalysts as either an integral catalyst matrix component or as a separate particulate additive having the same particle size as the conventional FCC catalyst, the catalysts may be used in the catalytic cracking of high molecular weight hydrocarbons feedstocks such as gas-oil, residual oil fractions and mixtures thereof.

The silica modified bayerite and/or silica-modified eta alumina used in the practice of our invention as mentioned above is obtained by co-precipitating sodium aluminate, sodium silicate an aluminum sulfate at a pH between 10 and 11.5, more preferably between 10.5 and 11, and at a temperature between 30 and 100°C, in particular 48 and 78°C (120 to 170 °F).

The silica modified bayerite and/or silica-modified eta alumina obtained by the above-noted process contains 0.5 to 10 weight percent SiO₂ and preferably 80 to 99.5 weight percent bayerite Al₂O₃ and the balance may be various phases of Al₂O₃ including boehmite and gibbsite.

Catalysts which may be improved by the addition of silica modified bayerite and/or eta alumina typically contain crystalline alumino-silicate zeolites such as synthetic faujasite i.e. type Y zeolite, type X zeolite, Zeolite Beta, ZSM-5, as well as heat treated (calcined) and/or rare earth exchange derivatives thereof. Zeolites which are particularly suited include calcined rare-earth exchanged type Y zeolite (CREY), the preparation of which is disclosed in US patent 3,402,996, ultrastable type Y zeolite (USY) as disclosed in US patent 3,293,192 as well as various partially exchanged type Y zeolites as disclosed in US patents 3,607,043 and 3,676,368. The catalysts may also contain molecular sieves such as SAPO and ALPO as disclosed in US patent 4,764,269. Typical catalyst compositions will include from 5 to 50 wt.% molecular sieve, 1 to 50 wt.%, preferably 2 to 40 wt.% silica modified bayerite/eta alumina dispersed in the catalyst particles, and the balance will comprise inorganic oxide binders and additives such as silica, silica alumina and alumina gels and sols as well as clay such as kaolin.

The preparation of silica modified bayerite/eta alumina additives which may be used in the practice of our invention involves combining from 10 to 90 weight percent silica-modified bayerite, and/or silica-modified eta alumina and the desired matrix components, such as clay and/or inorganic oxide binders, into an aqueous slurry, and forming the slurry into catalyst particles of desired size. To obtain additive suitable for use in fluid catalytic cracking (FCC) operations, the slurry is spray dried to obtain particles having a size range from 20 to 140 µm. The silica modified bayerite additive is combined with zeolite containing FCC catalysts in amounts to impart a silica-modified bayerite and/or silica-modified eta alumina component of 1 to 50 weight percent in the FCC catalyst/additive mixture. Procedures that may be used in the practice of the invention are disclosed in US 3,957,689, 4,126,579, 4,226,743, 4,458,023 and Canadian patent 967,136.

Using the catalyst preparation procedures set forth in U.S. 3,957,689 and U.S. 4,458,023, catalysts and additives of the present invention are obtained which are attrition resistant and particularly suited for use in commercial FCC operations. Catalysts and additives of the present invention which include the silica/alumina sol binder matrix described in U.S. 3,957,689 or the alumina sol binder described in U.S. 4,458,023 will possess a Davison Attrition Index of 12 or less. The Davison Attrition Index, DI, is determined by the following procedure.

### DI Test

A 7 g sample of catalyst is screened to remove particles in the 0 to 20 µm size range. The particles above 20 µm are then subjected to a 5 hour test in the standard Roller Particle Size Analyzer using a 1.8 mm (0.07 inch) jet and 2.54 cm (1 inch) I.D. U-Tube as supplied by American Instrument Company, Silver Spring, Md. An air flow of 21 liters per minute is used. The Davison Index is calculated as follows:$\text{Davison Index =} \frac{\text{Wt. 0-20 micron material formed during test}}{\text{Wt. original 20 + micron fraction}} \text{×100}$

Accordingly, the catalysts and additives of the present invention are characterized by a DI of 12 or less and preferably below 10, and more preferably from 1 to 10 and an average bulk density (ABD) of 0.6 to 1 g/cm³ and preferably 0.7 to 1 g/cm³ subsequent to heating in air for 2 hours at 538°C (1000°F).

The hydrocarbon feedstocks that are used typically contain from 2 to 10 ppm and as much as 15 ppm nickel. These feedstocks include gas-oils which have a boiling range of from 340 to 565°C as well as residual feedstocks and mixtures thereof.

The catalytic cracking process is conducted in conventional FCC units wherein reaction temperatures that range of from 400 to 700°C and regeneration temperatures from 500 to 850°C are utilized. The catalyst, i.e. inventory, is circulated through the unit in a continuous reaction/regeneration process during which nickel is deposited on the catalyst. The catalyst inventory is maintained at a nickel level of preferably from 300 to 2500 ppm and in some instances as high as 3000 to 8000 ppm by the addition of fresh catalyst and removal of equilibrium catalyst. During use, some of the bayerite may be converted to eta alumina at reaction temperatures employed during the catalytic cracking process. As indicated in the literature bayerite can be converted to eta alumina by heating to temperatures in excess of 250°C. It is observed that at the equilibrium nickel levels described above the quantity of coke and hydrogen (C + H₂) (as measured in a pilot plant) will remain within acceptable levels i.e. from 3 to 6 wt.% C and from 0.3 to 0.8 wt.% H₂ based on the weight of fresh feed processed.

Having described the basic aspects of the invention the following examples are given to illustrate specific embodiments.

### Example 1

### Preparation of Silica Containing Bayerite

Sodium aluminate, sodium silicate, and aluminum sulfate solutions were prepared as follows:
(a) Sodium aluminate - 408 kg (900 lbs) of solution containing 20 weight percent alumina and 17 weight percent Na₂O having a specific gravity of 1.44 g/ml was prepared by reacting Al₂O₃ powder to sodium hydroxide solution.
(b) Sodium silicate - 19,1 kg (42 lbs) of 38°Be sodium silicate solution having 3.25 weight ratio SiO₂ to Na₂O was diluted with 31,8 kg (70 lbs) H₂O.
(c) Aluminum sulfate - 544 kg (1200 lbs.) of solution containing 7.0 weight percent alumina and 20 weight percent sulfate with specific gravity of 1.28 g/ml was prepared by reacting Al₂O₃ powder with H₂SO₄.

A 1893 l (500 gallon) agitated reactor was charged with a 700 l (185 gallon) water heel at 60°C (140°F). The reaction temperature was kept in the 60-66°C (140-150°F) range. Then 2,27 kg (5 lbs.) of magnesium sulfate heptahydrate powder was added, followed by 2,27 kg (5 lbs) of 50% caustic soda. The pH was between 11.3 and 11.6 and the mixture was permitted to react for 5 minutes to form an aqueous suspension Mg(OH)₂ seed particulates. The aluminate flow was then started at a rate of 2.8 l per minute (0.75 GPM) and the aluminum sulfate flow was started 5 seconds later at a rate of 0.4 GPM (≈1.5 l per minute) until the pH dropped to 11.0 after which the flow rate was adjusted to maintain a pH of 10.70 to 10.75. Silicate flow was started at a rate of 0.25 GPM (≈ 0.95 l per minute) after the initial pH decreased to 11.0 (between 5 and 7 minutes). The addition of reactants (strike) was continued for 100 minutes, after which the slurry was stabilized to pH 9.7 with aluminum sulfate. The silica containing bayerite slurry was filtered and washed with 66°C (150°F) water on a horizontal vacuum belt filter. The filter cake was collected on trays and oven dried at a temperature of 96°C (205°F).

The final product had the following chemical, physical and X-ray (crystalline) properties.
Chemical Analysis weight percent T.V. - 39.5
Chemical Analysis weight percent Na₂O - 1.24
Chemical Analysis weight percent SO₄ - 0.13
Chemical Analysis weight percent SiO₂ - 3.95
Chemical Analysis weight percent MgO - 0.35
X-ray Analysis:
   - Bayerite -: 79% crystallinity
   - Pseudoboehmite -: Remainder

### Example 2

### Preparation of Silica-modified Eta Alumina

A sample of the silica-containing bayerite of Example 1 was heated to a temperature of 538°C for 120 minutes to convert the bayerite of Example 1 to eta alumina having BET surface area of 381 m/g and a nitrogen pore volume of 0.42 cc/g.

### Example 3

A.) Bayerite (Alumina A) was prepared as follows:
Sodium aluminate and aluminum sulfate were prepared according to the methods of U.S. patent 4,154,812 and kept at 52°C (125°F). To 700 l (185 gallons) of water at 60°C (140°F) sodium aluminate was added at a rate of 2,84 l (0.75 gallons) per minute. Aluminum sulfate was simultaneously added at a rate to keep the pH constant at 10.75 and precipitate alumina. The precipitation reading was continued for 100 minutes. Afterwards the flow of sodium aluminate was terminated. The pH of the slurry was adjusted to a final value of 9.7 with additional aluminum sulfate. The precipitated alumina was recovered by filtration and washed with tap water at 66°C (150°F) and oven dried.

B.) Silica modified bayerite (Alumina B) was prepared as follows:
The same procedure as part A was used with the following exception. A third stream containing sodium silicate, having 10% SiO₂ and 3% Na₂O was added during the precipitation at a rate of one liter per minute. A total of 50,9 kg (112 lbs) of the sodium silicate was used to give 4% SiO₂ on the final product.

### Example 4

The properties of Alumina A and Alumina B are shown in Table I. Upon calcination in air for 2 hours at 538°C (1000°F), Alumina B exhibited higher BET surface area and nitrogen pore volume than Alumina A. Upon steaming at atmospheric pressure for 4 and 8 hours at 816°C (1500°F) and 4 hours at 871°C (1600°F), Alumina B exhibited about 60% greater surface area retention than Alumina A. Furthermore, as shown in Figure 2, whereas Alumina A undergoes significant transformation to theta-alumina upon steaming for 4 hours at 871°C (1600°F), Alumina B still exhibits predominantly eta-alumina with only a minor amount of theta-alumina. Thus the silica-stabilized alumina exhibits both greater surface area and phase stability than the unstabilized alumina.

### Example 5

A.) Catalyst A was prepared as follows:
7.3 kg of ultrastable Y zeolite was blended with 2.95 kg of Alumina A and slurried in 29.7 kg of water. The zeolite and alumina slurry was mixed in a high intensity mixer and milled to a fine particle size. 18.6 kg of this slurry was added to 4.9 kg of clay and 26.7 kg of silica sol, prepared according to the teachings of U.S. 3,957,689 and spray dried. The spray dried catalyst was washed with an ammonium sulfate solution to remove the Na₂O and exchanged with a rare earth chloride solution to obtain 2.6 to 2.7 weight percent rare earth oxide on Catalyst.

B.) Catalyst B, having the same composition as Catalyst A, with the only exception that a silica modified bayerite having 4 wt.% SiO₂ (Alumina B) was substituted in place of bayerite, was prepared. Properties of Catalysts A and B are shown in Table II.

### Example 6

Both Catalysts A and B of Example 5 were steamed for 4 hours at 816°C (1500°F) in a fluidized bed under atmospheric pressure of steam. After steaming, Catalyst B exhibited a higher matrix area than Catalyst A. The two steamed catalysts were evaluated for their ability to crack a Sour Import Heavy Gas Oil in a microactivity test unit (ASTM D-3907-80). The yield comparison is shown in Table III. The catalyst of the present invention (Catalyst B) yielded lower dry gas (C₁ + C₂'s), lower LPG (C₃ + C₄), higher gasoline and higher LCO. The higher yield of LCO, or better bottoms cracking, could be attributed to the higher matrix area of Catalyst B. However, the improved gasoline yield was an unexpected result.

### Example 7

Catalysts A and B were treated with 50% steam at 816°C (1500°F) and atmospheric pressure for 12 hours, impregnated with nickel and vanadium naphthenates to a level of 2000 ppm Ni and 2700 ppm V, and treated with steam (30V%) again at 816°C (1500°F) and atmospheric pressure for 4 hours. The metals treated catalysts have the properties shown on Table II. The metals treated catalysts were evaluated in the Davison Circulating Riser (DCR) pilot plant. The results of the evaluation are shown in Table IV. Catalyst B was higher in activity than catalyst A, as indicated by the lower catalyst to oil required to achieve a constant level of conversion. In addition, catalyst B yielded lower hydrogen and coke and higher gasoline. This illustrates the improved metals tolerance properties of the silica stabilized bayerite/eta alumina.

**TABLE I**

| **Properties of Bayerite (Alumina A) and** **Silica-Modified Bayerite (Alumina B)** | | |
|---|---|---|
| | **Alumina A** | **Alumina B** |
| Average Particle Size/µm | 28 | 12 |
| Bulk Density/g cm⁻³ | 0.9 | 0.9 |
| TV | 33.6 | 39.0 |
| %SO₄ | 0.17 | 0.13 |
| %SiO₂ | - | 3.95 |
| BET @ 538°C (1000°F)/mg⁻¹ | 335 | 381 |
| N2 PV/cm³g⁻¹ | 0.29 | 0.42 |

| **Steaming Study** | | |
|---|---|---|
| BET 4 hours @ 816°C (1500°F)/mg⁻¹ | 99 | 154 |
| BET 8 hours @ 816°C (1500°F)/mg⁻¹ | 91 | 147 |
| BET 4 hours @ 871°C (1600°F)/mg⁻¹ | 79 | 122 |

**TABLE II**

| **Properties of Catalysts A and B** | | |
|---|---|---|
| | **Catalyst A** | **Catalyst B** |
| **Chemical Analysis** | | |
| Na₂O | 0.36 | 0.38 |
| Al₂O₃ | 33.1 | 33.7 |
| RE₂O₃ | 2.7 | 2.6 |
| SO₄ | 0.42 | 0.49 |
| **Physical Properties/2 hours @ 538°C (1000°F)** | | |
| Davison Index | 6 | 8 |
| Average Bulk Density/cm³g⁻¹ | 0.72 | 0.70 |
| Zeolite Area/mg⁻¹ | 187 | 197 |
| Matrix Area/mg⁻¹ | 86 | 85 |
| Relative Zeolite Intensity | 96 | 91 |
| Average Particle Size/µm | 67 | 71 |
| **4 hours @ 816°C (1500°F)/100% steam** | | |
| Unit Cell Size/Å | 24.29 (2.429 nm) | 24.29 (2.429 nm) |
| Relative Zeolite Intensity | 60 | 64 |
| Zeolite Area/mg⁻¹ | 124 | 127 |
| Matrix Area/mg⁻¹ | 38 | 43 |
| **Metals Test** | | |
| Unit cell size/Å | 24.28 (2.428 nm) | 24.29 (2.429 nm) |
| Relative Zeolite Intensity | 56 | 62 |
| Zeolite Area | 120 | 128 |
| Matrix Area | 35 | 43 |
| ppm Ni | 2049 | 2061 |
| ppm V | 2740 | 2720 |

**TABLE III**

| **Yield Comparison of Catalysts A and B** | | |
|---|---|---|
| | **Catalyst A** | **Catalyst B** |
| % Conversion : | 70 | 70 |
| C/O : | 4.28 | 4.15 |

| **Yields** | | |
|---|---|---|
| H₂ : | .055 | .058 |
| C₁ + C₂'s : | 2.6 | 2.4 |
| C₃ olefins : | 4.5 | 4.4 |
| Total C₃'s : | 6.0 | 5.7 |
| C₄ olefins : | 4.7 | 4.5 |
| iso C₄ : | 4.2 | 4.1 |
| Total C₄'s : | 10.0 | 9.7 |
| C₅₊ Gasoline : | 47.7 | 48.5 |
| LCO : | 19.5 | 19.9 |
| HCO : | 10.5 | 10.5 |
| Coke : | 3.6 | 3.6 |
| Mass Balance : | 99.96 | 99.96 |

**TABLE IV**

| **DCR Constant Conversion Comparison** | | |
|---|---|---|
| **Catalyst** | **Catalyst A** | **Catalyst B** |
| Catalyst to Oil | 5.2 | 4.7 |
| Conversion, vol.% | 78 | 78 |
| H₂, wt.% | 0.54 | 0.50 |
| C₁ + C₂'s, wt.% | 3.27 | 3.02 |
| C₃=, vol.% | 7.6 | 7.5 |
| nC₃, vol.% | 2.1 | 2.1 |
| Total C₃'s, vol.% | 9.8 | 9.5 |
| C₄=, vol.% | 8.0 | 8.3 |
| iC₄, vol.% | 3.9 | 3.9 |
| nC₄, vol.% | 0.9 | 0.9 |
| Total C₄'s, vol.% | 12.7 | 13.0 |
| Gasoline, 221°C (430°F), vol.% | 61.6 | 62.4 |
| LCO, 221-338°C (430-640°F), vol.% | 12.6 | 12.6 |
| API | 19.0 | 19.0 |
| Bottoms, 338°C+ (640°F+), vol.% | 9.4 | 9.4 |
| API | 2.1 | 2.1 |
| Coke, wt.% | 8.6 | 8.2 |

## Claims

1. A composition useful in catalytic cracking, said composition comprising a silica-modified bayerite and/or silica-modified eta alumina containing 0.5 to 10 weight percent silica.

2. The composition of claim 1 which contains up to 2 weight percent magnesia.

3. The composition of claim 1 wherein crystalline bayerite comprises at least 70 weight percent of said composition.

4. The composition of claim 1 having a surface area of 300 to 400 m/g and a pore volume of 0.30 to 0.50 cc/g in pores ranging from 20 to 1500 Å (2 to 150 nm).

5. A method for preparing silica-containing bayerite which comprises:
(a) reacting aqueous solutions of sodium aluminate, sodium silicate and aluminum sulfate at a pH of 10.5 to 11.5; and
(b) recovering precipitated silica-containing bayerite from the reaction mixture.

6. The method of claim 5 conducted in the presence of finely divided magnesium hydroxide nucleation seeds.

7. The method of claim 6 wherein the recovered silica-containing bayerite is heated to a temperature of 200 to 800°C to obtain silica-containing eta alumina.

8. A catalytic cracking catalyst composition which contains up to 50 weight percent of the composition of any of claims 1 to 4.

9. The catalytic cracking catalyst composition of claim 8 which comprises a molecular sieve dispersed in an inorganic oxide matrix and silica modified bayerite and/or silica-modified eta alumina that contains from 0.5 to 10 weight percent SiO₂.

10. The compositon of claim 8 wherein said silica modified bayerite and/or silica-modified eta alumina is dispersed in the matrix of said catalyst.

11. The composition of claim 8 wherein said silica modified bayerite is included as separate particulate additive.

12. The composition of claim 8 which contains from 2 to 40 weight percent of said silica modified bayerite and/or silica-modified eta alumina.

13. The composition of claim 8 which contains from 2 to 40 weight percent silica modified bayerite and/or silica-modified eta alumina, from 5 to 50 weight percent synthetic faujasite, from 10 to 60 weight percent clay, and from 10 to 30 weight percent of an inorganic oxide binder selected from the group consisting of silica, alumina and silica-alumina, hydrogels and sols.

14. The composition of claim 8 wherein the phase purity of said silica modified bayerite and/or silica-modified eta alumina is above 75 percent.

15. The composition of claim 13 wherein said binder is silica/alumina sol.

16. The composition of claim 13 wherein said binder is alumina sol.

17. The composition of claim 8 having a particulate size of 20 to 140 µm, and wherein the Davison Attrition Index is less than 12.

18. The composition of claim 17 wherein the average bulk density of said catalyst is above 0.6 g/cm³.

19. A method for the catalytic cracking of hydrocarbons which comprises reacting a hydrocarbon feedstock with a catalyst of one of claims 8 to 18.

20. The method of claim 19 wherein said feedstock contains in excess of 2 ppm Ni.

21. The method of claim 20 which comprises continuing said reaction while maintaining a catalyst inventory which includes from about 300 to 8000 ppm nickel which is deposited on said catalyst during the cracking reaction.

22. The method of claim 21 wherein the cracking reaction is conducted at a temperature of 400 to 700°C.

23. A catalytic cracking catalyst additive composition which comprises 10 to 90 weight percent silica of the silica modified bayerite and/or silica-modified eta alumina composition of any of claims 1 to 4 dispersed in an inorganic oxide matrix.

24. The composition of claim 23 having a DI of 1 to 10 and a particle size of 20 to 140 µm.

25. The composition of claim 23 which contains from 10 to 90 weight percent of said silica modified bayerite and/or silica-modified eta alumina, and from 10 to 50 weight percent of an inorganic oxide matrix selected from the group consisting of silica, alumina and silica-alumina, hydrogels and sols and clay.

## Patentansprüche

1. Zum katalytischen Cracken verwendbare Zusammensetzung, welche ein Siliciumdioxid modifiziertes Bayerit- und/oder Siliciumdioxid modifiziertes Eta-Aluminiumoxid mit einem Gehalt an 0,5 bis 10 Gew.% Siliciumdioxid enthält.

2. Zusammensetzung nach Anspruch 1, welche bis zu 2 Gew.% Magnesiumoxid enthält.

3. Zusammensetzung nach Anspruch 1, in welcher kristallischer Bayerit mindestens 70 Gew.% der Zusammensetzung ausmacht.

4. Zusammensetzung nach Anspruch 1, mit einer Oberfläche von 300 bis 400 m/g und einem Porenvolumen von 0,30 bis 0,50 cm³/g in Poren eines Bereichs von 20 bis 1 500 Å (2 bis 150 nm).

5. Verfahren zum Herstellen von Siliciumdioxid enthaltendem Bayerit, wobei man
(a) wäßrige Lösungen von Natriumaluminat, Natriumsilikat und Aluminiumsulfat bei einem pH von 10,5 bis 11,5 umsetzt; und
(b) ausgefällten, Siliciumdioxid enthaltenden Bayerit aus dem Reaktionsgemisch isoliert.

6. Verfahren nach Anspruch 5, welches man in der Anwesenheit von feinteiligen Magnesiumhydroxidimpfkristallen durchführt.

7. Verfahren nach Anspruch 6, in welchem der Siliciumdioxid enthaltende Bayerit auf eine Temperatur von 200 bis 800°C erhitzt wird, wobei man Siliciumdioxid enthaltendes Eta-Aluminiumoxid erhält.

8. Zusammensetzung mit katalytischem Crackkatalysator, welche bis zu 50 Gew.% der Zusammensetzung nach einem der Ansprüche 1 bis 4 enthält.

9. Zusammensetzung mit katalytischem Crackkatalysator nach Anspruch 8, welche ein Molekularsieb dispergiert in einer Matrix aus anorganischem Oxid und Siliciumdioxid modifiziertes Bayerit- und/oder Siliciumdioxid modifiziertes Eta-Aluminiumoxid enthaltend 0,5 bis 10 Gew.% SiO₂ umfaßt.

10. Zusammensetzung nach Anspruch 8, in welcher das Siliciumdioxid modifizierte Bayerit- und/oder Siliciumdioxid modifiziertes Eta-Aluminiumoxid in der Matrix des Katalysators dispergiert ist.

11. Zusammensetzung nach Anspruch 8, in welcher der Siliciumdioxid modifizierte Bayerit als separates teilchenförmiges Additiv enthalten ist.

12. Zusammensetzung nach Anspruch 8, welche 2 bis 40 Gew.% des Siliciumdioxid modifierten Bayerit- und/oder Siliciumdioxid modifizierten Eta-Aluminiumoxids enthält.

13. Zusammensetzung nach Anspruch 8 enthaltend 2 bis 40 Gew.% Siliciumdioxid modifiziertes Bayerit- und/oder Siliciumdioxid modifiziertes Eta-Aluminiumoxid, 5 bis 50 Gew.% synthetischen Faujasit, 10 bis 60 Gew.% Ton, und 10 bis 30 Gew.% eines anorganischen Oxids als Bindemittel ausgewählt aus der Gruppe bestehend aus Siliciumdioxid, Aluminiumoxid und Siliciumdioxid-Aluminiumoxid, Hydrogelen und Solen.

14. Zusammensetzung nach Anspruch 8, in welcher die Phasenreinheit des Siliciumdioxid modifizierten Bayerit- und/oder Siliciumdioxid modifizierten Eta-Aluminiumoxids über 75% ist.

15. Zusammensetzung nach Anspruch 13, in welcher das Bindemittel Siliciumdioxid-/Aluminiumoxidsol ist.

16. Zusammensetzung nach Anspruch 13, in welcher das Bindemittel Aluminiumoxidsol ist.

17. Zusammensetzung nach Anspruch 8 mit einer Teilchengröße von 20 bis 140 µm, und in welcher der Davison-Abrieb-Index geringer als 12 ist.

18. Zusammensetzung nach Anspruch 17, in welcher die durchschnittliche Schüttdichte des Katalysators über 0,6 g/cm³ ist.

19. Verfahren zum katalytischen Cracken von Kohlenwasserstoffen, wobei man eine Kohlenwasserstoffbeschickung mit einem Katalysator nach einem der Anspruche 8 bis 18 zur Reaktion bringt.

20. Verfahren nach Anspruch 19, in welchem die Beschickung mehr als 2 ppm Ni enthält.

21. Verfahren nach Anspruch 20, bei welchem man die Reaktion fortsetzt, während ein Katalysatorbestand aufrechterhalten wird, der etwa 300 bis 8000 ppm Nickel einschließt, das auf dem Katalysator während der Crackreaktion abgelagert wird.

22. Verfahren nach Anspruch 21, in welchem die Crackreaktion bei einer Temperatur von 400 bis 700°C durchgeführt wird.

23. Additivzusammensetzung mit katalytischem Crackkatalysator enthaltend 10 bis 90 Gew.% Siliciumdioxid der Siliciumdioxid modifizierten Bayerit- und/oder Siliciumdioxid modifizierten Eta-Aluminiumoxidzusammensetzung eines der Ansprüche 1 bis 4 dispergiert in einer Matrix aus anorganischem Oxid.

24. Zusammensetzung nach Anspruch 23 mit einem DI von 1 bis 10 und einer Teilchengröße von 20 bis 140 µm.

25. Zusammensetzung nach Anspruch 23 enthaltend 10 bis 90 Gew.% des Siliciumdioxid modifizierten Bayerit- und/oder Siliciumdioxid modifizierten Eta-Aluminiumoxids, und 10 bis 50 Gew.% einer Matrix aus anorganischem Oxid ausgewählt aus der Gruppe bestehend aus Siliciumdioxid, Aluminimoxid und Siliciumdioxid-Aluminiumoxid, Hydrogelen und Solen und Ton.

## Revendications

1. Composition utile dans le craquage catalytique, ladite composition comprenant une bayerite modifiée à la silice et/ou une êta-alumine modifiée à la silice contenant 0,5 à 10% en poids de silice.

2. Composition de la revendication 1, qui contient jusqu'à 2 pour cent en poids de magnésie.

3. Composition de la revendication 1, où la bayerite cristalline forme au moins 70 pour cent en poids de ladite composition.

4. Composition de la revendication 1 ayant une aire superficielle de 300 à 400 m/g et un volume des pores de 0,30 à 0,50 cc/g en pores compris entre 20 et 1 500 Å (2 à 150 nm).

5. Méthode de préparation d'une bayerite contenant de la silice, qui comprend :
(a) la réaction de solutions aqueuses d'aluminate de sodium, du silicate de sodium et du sulfate d'aluminium à un pH de 10,5 à 11, ; et
(b) la récupération de la bayerite contenant de la silice précipitée du mélange réactionnel.

6. Méthode de la revendication 5 entreprise en présence de graines de nucléation d'hydroxyde de magnésium finement divisé .

7. Méthode de la revendication 6, où la bayerite contenant de la silice récupérée est chauffée à une température de 200 à 800°C pour obtenir de l'êta-alumine contenant de la silice.

8. Composition d'un catalyseur de craquage catalytique qui contient jusqu'à 50 pour cent en poids de la composition selon l'une quelconque des revendications 1 à 4.

9. Composition d'un catalyseur de craquage catalytique de la revendication 8,qui comprend un tamis moléculaire dispersé dans une matrice d'oxyde inorganique et de la bayerite modifiée à la silice et/ou de l'êta-alumine modifiée à la silice, qui contient 0,5 à 10 pour cent en poids de SiO₂.

10. Composition de la revendication 8, où ladite bayerite modifiée à la silice et/ou êta-alumine modifiée à la silice est dispersée dans la matrice dudit catalyseur.

11. Composition de la revendication 8, où ladite bayerite modifiée à la silice est incorporée sous la forme d'un additif particulaire séparé.

12. Composition de la revendication 8, qui contient 2 à 40 pour cent en poids de ladite bayerite modifiée à la silice et/ou êta-alumine modifiée à la silice.

13. Composition de la revendication 8, qui contient 2 à 40% en poids de ladite bayerite modifiée à la silice et/ou êta-alumine modifiée à la silice, de 5 à 50 pour cent en poids de faujasite synthétique, de 10 à 60 pour cent en poids d'argile et de 10 à 30 pour cent en poids d'un liant d'oxyde inorganique choisi dans le groupe consistant en silice, alumine et aluminosilicate, hydrogels et sols.

14. Composition de la revendication 8, où la pureté de phase de ladite bayerie modifiée à la silice et/ou êta-alumine modifiée à la silice est supérieure à 75 pour cent.

15. Composition de la revendication 13, où le liant est un sol de silice/alumine.

16. Composition de la revendication 13, où ledit liant est un sol d'alumine.

17. Composition de la revendication 8, ayant une grandeur des particules de 20 à 140 µm et où l'Indice d'Attrition de Davison est inférieur à 12.

18. Composition de la revendication 17, où la densité apparente moyenne dudit catalyseur est supérieure à 0,6 g/cm³.

19. Méthode pour le craquage catalytique d'hydrocarbures qui comprend la réaction d'une charge d'alimentation d'hydrocarbures avec un catalyseur de l'une des revendications 8 à 18.

20. Méthode de la revendication 19, où ladite charge d'alimentation contient plus de 2 ppm de Ni.

21. Méthode de la revendication 20, qui consiste à continuer ladite réaction tout en maintenant un stock du catalyseur qui contient environ 300 à 800 ppm de nickel qui se dépose sur ledit catalyseur pendant la réaction de craquage.

22. Méthode de la revendication 21, où la réaction de craquage est entreprise à une température de 400 à 700°C.

23. Composition additive d'un catalyseur de craquage catalytique qui comprend 10 à 90 pour cent en poids de silice de la composition de bayerite modifiée à la silice et/ou d'êta-alumine modifiée à la silice selon l'une quelconque des revendications 1 à 4 en dispersion dans une matrice d'oxyde inorganique.

24. Composition de la revendication 23, ayant une valeur ID de 1 à 10 et une grandeur de particules de 20 à 140 µm.

25. Composition de la revendication 23, qui contient 10 à 90 pour cent en poids de ladite bayerite modifiée à la silice et/ou êta-alumine modifiée à la silice et de 10 à 50 pour cent en poids d'une matrice d'oxyde inorganique choisie dans le groupe consistant en silice, alumine et aluminosilicate, hydrogels et sols et argile.
